# EUROPÄISCHE PATENTANMELDUNG

(11) **EP 1 048 827 A1**
(43) Veröffentlichungstag der Anmeldung: **02.11.2000**
(21) Anmeldenummer: 00103825.6
(22) Anmeldetag: 23.02.2000
(51) Int. Cl.: F01N 3/022, B01D 39/14, B01D 39/10

(54) **Filterstruktur zum Filtern von Feststoffen aus einem Gasstrom**

(30) Priorität: 30.04.1999 DE 19919928
(71) Anmelder: Oberland Mangold GmbH, 82467 Garmisch-Partenkirchen (DE)
(72) Erfinder: Mangold, Anton sen., 82467 Garmisch-Partenkirchen (DE); Mangold, Matthias, 82467 Garmisch-Partenkirchen (DE)
(74) Vertreter: Lang, Friedrich

(57) **Zusammenfassung**

Die Erfindung betrifft ein Filterstruktur zum Filtern von Feststoffen aus einem Gasstrom, insbesondere zum Reinigen des Abgases von Brennkraftmaschinen, mit einem Filtermedium aus Fasermaterial und einer Stützstruktur für das Fasermaterial, wobei das Fasermaterial im wesentlichen ein Fasergewebe ist, die Stützstruktur ein räumlich geprägtes Drahtgestrick ist, und die Filterstruktur aus zumindest einer ein Fasergewebe und ein geprägtes Drahtgestrick aufweisenden Lage aufgebaut ist. Dabei kann das Drahtgestrick mit Erhebungen und/oder Vertiefungen, insbesondere in Wellenform, geprägt sein. Die Erfindung betrifft des weiteren einen Partikelfilter zur Abgasreinigung mit einer Filterkerze, die eine Filterstruktur aus einem Fasergewebe und eine Stützstruktur aus Drahtgestrick für das Fasergewebe aufweist, wobei das zum Aufwickeln auf ein perforiertes Trägerrohr vorgesehene Fasergewebe und Drahtgestrick zumindest die Breite des perforierten Bereichs des Trägerrohres aufweisen und ein- oder mehrlagig auf das Trägerrohr aufgewickelt sind.

## Beschreibung

Die Erfindung betrifft eine Filterstruktur zum Filtern von Feststoffen aus einem Gasstrom, insbesondere zum Reinigen des Abgases von Brennkraftmaschinen, mit einem Filtermedium aus Fasermaterial und einer Stützstruktur für das Fasermaterial. Die Erfindung betrifft des weiteren einen Partikelfilter zur Abgasreinigung mit einer Filterkerze, die eine Filterstruktur aus einem Fasergewebe und eine Stützstruktur aus Drahtgestrick für das Fasergewebe aufweist.

Eine derartige Filterstruktur ist in der DE 35 45 762 A1 offenbart. Ein darin beschriebener Rußfilter enthält ein zylindrisches Gehäuse mit einer darin aufgenommenen Fasermattenrolle als Filtermedium, zu deren Herstellung eine Lage einer keramischen Fasermatte und eine Lage einer Metallgestrickmatte übereinandergelegt und spiralförmig aufgerollt werden. Durch das radiale Zusammenpressen der beiden Matten beim Aufrollen drückt sich die Metallgestrickmatte jeweils von beiden Seiten in die keramische Fasermatte und stabilisiert sie in dem entstehenden Mischgestrickaufbau. Die aufgerollte Fasermattenrolle wird unter Vorspannung in ein hohlzylindrisches Gehäuse eingesetzt. Als alternative Gestaltung wird vorgeschlagen, die Fasermattenrolle als Hohlzylinder zu bilden, der mit seiner Außenseite an der Gehäuseinnenseite des Rußfilters anliegt. Bei beiden Fasermattenrollen ist die Abgasführung durch das Rußfilter derart gewählt, daß der Abgasstrom die Fasermattenrolle im wesentlichen axial durchströmt und damit einen längeren Durchströmungsweg aufweist im Vergleich mit einer im wesentlichen nur radialen Durchströmung des Filtermediums, wie sie in dem in der DE 27 50 960 A1 offenbarten Rußfilter verwirklicht ist, bei dem keramisches Fasermaterial zwischen einem inneren und einem äußeren rohrförmigen Lochblech in hohlzylindrischer Form angeordnet ist und der Abgasstrom radial durch das Fasermaterial geführt wird. Das Fasermaterial besteht aus einer radial äußeren Lage loser Keramikfaserwatte und aus einer inneren, die Keramikfaserwatte abstützenden Lage von verwebter Keramikfasermatte. Zur Stützung des Keramikfasermaterials kann zwischen der verwebten Keramikfasermatte und dem inneren Lochblech ein Maschendraht mit kleiner Maschenweite angeordnet sein, der zum Verbessern der Strömungsverhältnisse im Filter auf einem zusätzlichen Maschendraht mit größerer Maschenweite angebracht sein kann.

Aus der EP 0 334 910 B1 ist ein Rußfilter mit rohrförmigen Filterkerzen bekannt geworden, die auf einem gelochten Rohr ein Filtermaterial aufweisen, das beispielsweise als rund-ge-strickte Maschenware aus Keramikgarn hergestellt ist. Ein derartiger Warenschlauch wird in der Art eines Strumpfes über das Rohr aufgezogen. Bei einem mehrlagigen Aufbau des Filtermaterials werden mehrere Warenschläuche übereinander auf das Rohr aufgezogen.

Der Erfindung liegt die **Aufgabe** zugrunde, eine Filterstruktur gemäß dem Oberbegriff des Anspruchs 1 anzugeben, die verbesserte Filtereigenschaften bei vergleichsweise geringem Abgasgegendruck aufweist, sowie einen Partikelfilter gemäß dem Oberbegriff des Anspruchs 13 anzugeben, der bei geringem Herstellungsaufwand dennoch eine gute Filterleistung aufweist.

Die Aufgabe wird dadurch gelöst, daß bei der gattungsgemäßen Filterstruktur erfindungsgemäß das Fasermaterial im wesentlichen ein hochtemperaturfestes Fasergewebe ist, daß die Stützstruktur ein räumlich geprägtes, hochtemperaturfestes Drahtgestrick ist, und daß die Filterstruktur aus zumindest einer ein Fasergewebe und ein geprägtes Drahtgestrick aufweisenden Lage aufgebaut ist. Durch die räumliche Prägung wird dem Drahtgestrick, das abgesehen von beim Stricken der einzelnen Drahtschlingen entstehenden Verschlingungen eben und flach ist, eine aus dieser flachen, ebenen Ausgangskonfiguration ein- oder beidseitig herausragende Formabweichung, wie z.B. Ausbauchungen oder dergleichen, aufgeprägt. Wenn das geprägte Drahtgestrick mit einem Fasergewebe zu einer Lage der Filterstruktur zusammengebracht wird, bildet das Drahtgestrick entsprechend der Prägestruktur eine das Fasergewebe fest haltende und komprimierende bzw. eine das Fasergewebe locker haltende Stützstruktur. Auf diese Weise wird die Dichte des Fasermaterials des Fasergewebes in nebeneinander liegenden Zonen variiert. In den Zonen mit komprimiertem Fasermaterial wird eine hohe Abscheidung von Feststoffpartikeln an dem Fasermaterial erzielt. In den nichtkomprimierten Zonen können sich einzelne Fasern oder Faserstränge aus dem Fasergewebe lockern, wodurch zusätzlich eine Feinstpartikelabscheidung an den einzelnen Fasern bzw. Fasersträngen erreicht wird und eine Speicherung von Partikeln in solchen Zonen mit geringerer Faserdichte erfolgt. Wegen dieser unterschiedlichen räumlichen Anordnung wird die Tiefenfilterwirkung unterstützt und eine hohe Abscheidung und Speicherwirkung bei geringem Abgasgegendruck wird erzielt. Durch die Prägung des Drahtgestricks zusammen mit hochtemperaturfesten Fasern wird eine Verkorkung, Verdichtung, gegenseitiges Verkleben sowie ein Schwinden des Filtermediums verhindert und deshalb wird eine lange Lebensdauer erzielt.

Anstelle des Fasergewebes oder zusätzlich zum Fasergewebe wird nach einer bevorzugten Weiterbildung der Erfindung Nadelfilz verwendet.

Vorteilhafte Ausgestaltungen der erfindungsgemäßen Filterstruktur sind in den zugeordneten Unteransprüchen angegeben.

Zweckmäßigerweise ist das Drahtgestrick mit Erhebungen und/ oder Vertiefungen geprägt. Die einzelnen Drähte können an den vorbestimmten Stellen abhängig von der Betrachtungsweise als Erhebungen oder als Vertiefungen aus dem flachen Drahtgestrick entweder nur in eine der beiden Richtungen oder in beide Richtungen verformt werden. Dabei können die Erhebungen und/oder Vertiefungen punktförmig, linienförmig oder flächig ausgebildet sein und in unterschiedlichen Anordnungen über das Drahtgestrick verteilt sein, wobei das Drahtgestrick vorzugsweise in Wellenform geprägt ist und die Wellen in unterschiedlichen Winkeln bezüglich der Längserstreckung des Drahtgestricks ausgerichtet sein können. Des weiteren sind beispielsweise S-förmige Wellenverläufe oder Wellen in Fischgrätenmuster verwendbar. Bei einer übereinander liegenden Anordnung von zwei Drahtgestricklagen muß lediglich vermieden werden, daß die Wellenverläufe der zwei Drahtgestricklagen ineinandergreifend zu liegen kommen, da in diesem Fall der Wechsel von Zonen mit komprimierten Fasermaterial und mit lockerem Fasermaterial nicht gegeben wäre.

In einer bevorzugten Ausgestaltung ist mindestens ein Faden aus hochtemperaturfestem Fasermaterial in das Drahtgestrick eingestrickt und mit diesem geprägt. Der Faden läuft mit dem Draht des Drahtgestricks mit, ohne mit ihm fest verbunden zu sein, so daß dem Drahtgestrick ein identisches aber separates und unabhängiges Fasergestrick überlagert wird. Die Anzahl und Dicke der Fäden ist von der gewünschten Dichte des überlagerten Fasergestricks und von der angestrebten Filterwirkung abhängig. Der Faden kann dabei die gleichen Fasereigenschaften wie jene des Fasermaterials des Fasergewebes oder davon abweichende Fasereigenschaften aufweisen. Zwar ist es besonders vorteilhaft, daß das Drahtgestrick auch in diesem Fall eine räumliche Prägung aufweist. Grundsätzlich werden aber auch gute Filterergebnisse erzielt, wenn das Drahtgestrick hierbei nicht mit einer räumlichen Prägung versehen ist.

Die Filterstruktur kann aus sich regelmäßig oder unregelmäßig abwechselnden Lagen von Drahtgestrick, Drahtgestrick mit Hilfsfaden und/oder Fasergewebe mehrlagig aufgebaut sein, um eine Optimierung des Filterergebnisses z.B. durch Einstellen der Dichte des Fasermaterials in Abhängigkeit des Einsatzortes der Filterstruktur und des zu reinigenden Abgases zu erzielen.

Durch die Erhebungen bzw. die Vertiefungen des geprägten Drahtgestricks können somit Zonen mit komprimiertem Fasermaterial bzw. Fasergewebe und kammerartige Zonen zum lockeren Aufnehmen des Fasermaterials bzw. des Fasergewebes gebildet werden. Die taschenartigen Zonen zum lockeren Aufnehmen des Fasermaterials bzw. des Fasergewebes werden insbesondere dadurch gebildet, daß sich aufgrund der aufgeprägten Ausbauchungen zwei benachbarte Lagen des Drahtgestricks nur punktoder linienweise aneinander abstützen und im übrigen beabstandet voneinander sind. Dabei können sich zum Beispiel entgegengesetzt gerichtete Ausbauchungen zweier benachbarter Lagen in der Art einer "Amplitudenaddition" aufweiten oder gleichgerichtete Ausbauchungen können in der Art einer "Phasenverschiebung" Kammern bilden.

Wenn es gewünscht wird, kann hierbei durch gezielte Phasenverschiebung gleichgerichteten Ausbauchungen die Komprimierung des darin enthaltenen Fasermaterials genau eingestellt werden. Im Extremfall ist es möglich, das gesamte Fasermaterial maximal zu komprimieren, wenn es im Hinblick auf die Filtereigenschaften zweckmäßig erscheint.

Zur Verbesserung der Filterwirkung kann es vorteilhaft sein, wenn das Filtermedium nicht nur aus Fasergewebe besteht, sondern auch zusätzlich lockeres Fasermaterial aus hochtemperaturfesten Fasern aufweist.

Zur Optimierung der Filterwirkung für unterschiedliche Anwendungsfälle der Filterstruktur kann das Fasergewebe in seiner Höhe, Dichte, Webart und Faserart variiert sein. Dabei kann die Dichte in Quer- und in Längsrichtung des Fasergewebes unterschiedlich sein. Bei unterschiedlichen Webarten können sich die einzelnen Fäden von Kette und Schuß unterschiedlich kreuzen. Eine hochtemperaturfeste Faser kann als Endlos- oder Stapelfaser sowie als Keramik- oder als Glasfaser verwendet werden. Des weiteren kann das Fasergewebe eine Beschichtung aus an sich bekanntem Material zur Rußzündtemperaturabsenkung oder als Oxidationskatalysator aufweisen.

Daneben kann die Prägung des Drahtgestricks z.B. in der Höhe der Erhebungen bzw. der Vertiefungen variiert sein. Das Profil kann von z.B. wellig, rechteckig oder dreieckig gewählt werden. Durch Festlegung der Phase wird der Abstand bis zur Wiederholung eines regelmäßigen Musters bestimmt.

Für unterschiedliche Filteranforderungen kann auch vorgesehen sein, das Drahtgestrick in seiner Gestrickart, Maschenweite, Stärke und in dem Werkstoff des Drahtes zu variieren. Neben einem Flachgestrick kann auch ein Rundgestrick verwendet werden, das beim Einbringen in die Filterstruktur flach zusammengelegt wird. Die beiden seitlichen Ränder haben dadurch geschlossene Maschenstrukturen, die sich nicht auflösen können.

Die Aufgabe wird des weiteren dadurch gelöst, daß bei dem gattungsgemäßen Partikelfilter erfindungsgemäß das zum Aufwickeln auf ein perforiertes Trägerrohr vorgesehene Fasergewebe und Drahtgestrick zumindest die Breite des perforierten Bereichs des Trägerrohres aufweisen und ein- oder mehrlagig auf das Trägerrohr aufgewickelt sind. Da die Wicklung gleichzeitig und gleichmäßig über die gesamte Breite aufgebracht worden ist, wird eine homogene Schichtstruktur der Filterstruktur erzielt und eine Bildung von Bypässen für das Abgas verhindert.

Die Stützstruktur, die eine bestimmte Anordnung und Dichte des Fasermaterials erhalten soll, ist zweckmäßigerweise ein räumlich geprägtes Drahtgestrick, das insbesondere gemäß den obigen Ausführungen gestaltet ist.

In einer bevorzugten Ausführungsform ist das Drahtgestrick ein Rundgestrick, das vor oder bei dem Aufwickeln auf das Trägerrohr flach zusammengelegt wird und sandwichartig zusätzlich eine Lage Fasergewebe enthalten kann. Das zusammengelegte Rundgestrick kann dazu an einer Längskante aufgeschnitten werden, um das Einlegen des Fasergewebes zu erleichtern.

Wenn die beiden Endbereiche des perforierten Trägerrohres ohne Lochung ausgebildet sind, kann in diesem Bereich die darauf gewickelte Filterstruktur bevorzugt befestigt werden.

Für das Aufbringen und Fixieren der Filterstruktur ist es zweckmäßig, wenn das Trägerrohr an seinen beiden Endbereichen axiale Begrenzungen für die Filterstruktur aufweist.

Wenn das Fasergewebe auf sich selbst oder um die beiden Seitenkanten des zugehörigen Drahtgestricks gefaltet ist, wird bei ihrem Aufwickeln der durch die Faltung verdickte Seitenstreifen stärker radial zusammengepreßt, so daß eine verbesserte Abdichtung an dem Trägerrohr erzielt wird.

Zweckmäßigerweise wird der Aufbau der Filterstruktur in Abhängigkeit von der radialen Entfernung vom Trägerrohr unterschiedlich gebildet, insbesondere unter Berücksichtigung der Dichte des Fasermaterials. Zu diesem Zweck können einzelne Lagen von Fasergewebe und/oder Drahtgestrick zusätzlich eingewickelt oder abschnittsweise weggelassen werden.

Ein erfindungsgemäßer Partikelfilter kann eine Mehrzahl von Filterkerzen in einem vom Abgas durchströmten Filtergehäuse aufweisen.

Nachfolgend wird die Erfindung anhand eines Ausführungsbeispiels einer erfindungsgemäßen Filterstruktur unter Bezugnahme auf Zeichnungen näher erläutert. Es zeigen schematisch:
- Fig. 1:: in einer perspektivischen Draufsicht in schematischer Darstellung eine erfindungsgemäße Filterstruktur beim Herstellen einer Filterkerze eines Partikelfilters;
- Fig. 2:: in einer Querschnittsansicht eine Filterkerze mit einer Filterstruktur;
- Fig. 3:: in einer Querschnittsansicht in vergrößerter Darstellung die erfindungsgemäße Filterstruktur;
- Fig. 4:: in einer perspektivischen Draufsicht ein weiteres Ausführungsbeispiel einer erfindungsgemäßen Filterstruktur beim Herstellen einer Filterkerze; und
- Fig. 5: in einer Draufsicht ein Draht-/Fadengestrick.

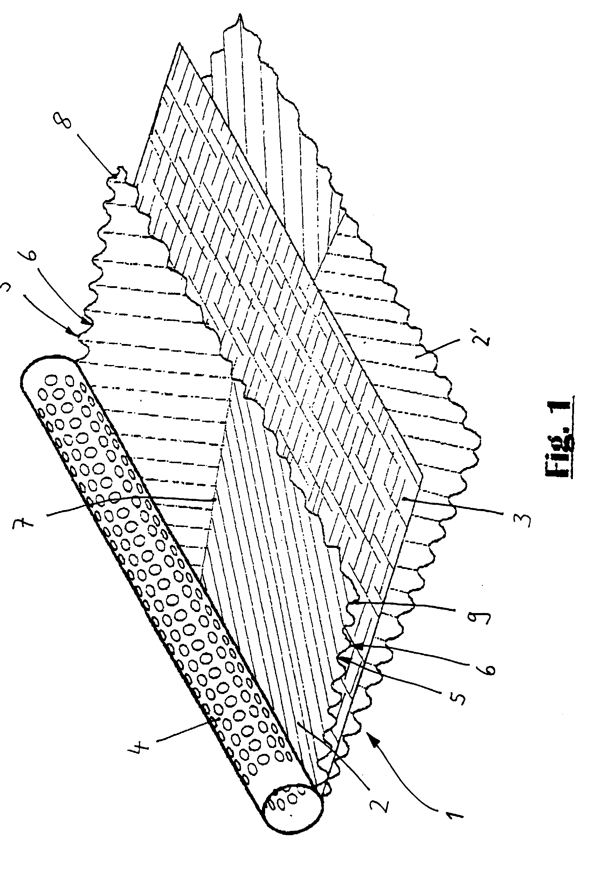

Ein Ausführungsbeispiel einer erfindungsgemäßen Filterstruktur 1 (siehe Fig. 1) enthält ein Drahtgestrick 2 in einer ersten Lage, die eine Stützstruktur für ein Fasergewebe 3 bildet, das in Form einer Matte an dem Drahtgestrick 2 aufliegt. Das Drahtgestrick 2 wie auch das Fasergewebe 3 sind in etwa in der gleichen Breite hergestellt oder zugeschnitten und werden auf ein perforiertes Trägerrohr 4 aufgewickelt, dessen Länge im wesentlichen gleich der Breite des Drahtgestricks 2 bzw. des Fasergewebes 3 ist. Erstreckt sich die Perforierung nur über einen Teilbereich des Trägerrohres 4, so überdeckt die gebildete Filterstruktur 1 zumindest diesen perforierten Bereich. Sowohl das Drahtgestrick 2 wie auch das Fasergewebe 3 sind aus temperaturfestem Material hergestellt.

Das Drahtgestrick 2 enthält eine räumliche Prägung mit sich abwechselnden Erhebungen 5 und Vertiefungen 6 in Wellenform, die auch als Ausbauchungen bezeichnet werden können, wobei die Erhebungen 5 oder Wellenberge und die Vertiefungen 6 oder Wellentäler von einer Mittellinie 7 des Drahtgestricks 2 aus in V-förmiger Anordnung zu den beiden Seitenrändern 8 und 9 des Drahtgestricks 2 hin verlaufen. In Abhängigkeit der Betrachtungsweise können die unterschiedlichen Abschnitte der Wellenform entweder als Erhebungen 5 oder als Vertiefungen 6 angesehen werden.

Die Prägung des Drahtgestricks 2 kann beispielsweise durch eine Prägevorrichtung mit sich gegenüberliegenden Prägerollen erfolgen, durch die das Drahtgestrick 2 hindurchläuft, bevor es auf das Trägerrohr 4 gewickelt wird. In einer alternativen Ausführung wird das Drahtgestrick 2 mit dem Fasergewebe 3 als gemeinsame Lage gleichzeitig geprägt. Dabei paßt sich das Fasergewebe 3 in gewissem Maß der Prägung bzw. der Wellenform 5, 6 an. Das Drahtgestrick kann mit weiteren Arten von regelmäßigen und auch unregelmäßigen Prägemustern geprägt sein.

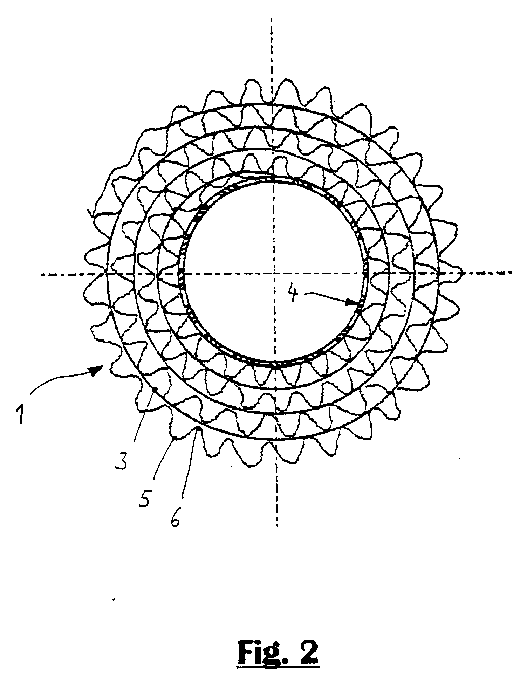

In Fig. 2 ist die auf das Trägerrohr 4 aufgewickelte Filterstruktur 1 in ihrer mehrlagigen Anordnung im Querschnitt dargestellt, wobei das Fasergewebe 3 als flache, dünne Lage und das Drahtgestrick 2 mit deutlich ausgeprägter Wellenform 5, 6 dargestellt ist, die in der Praxis auch mit geringerer Höhe der Ausbauchungen ausgeführt sein kann. Die Art und die Struktur des Drahtgestricks 2 und des Fasergewebes 3 kann dabei gemäß der Darstellung über die Wicklungslänge und somit über die mehreren Lagen einheitlich sein oder sie kann auch abgeändert und variiert sein.

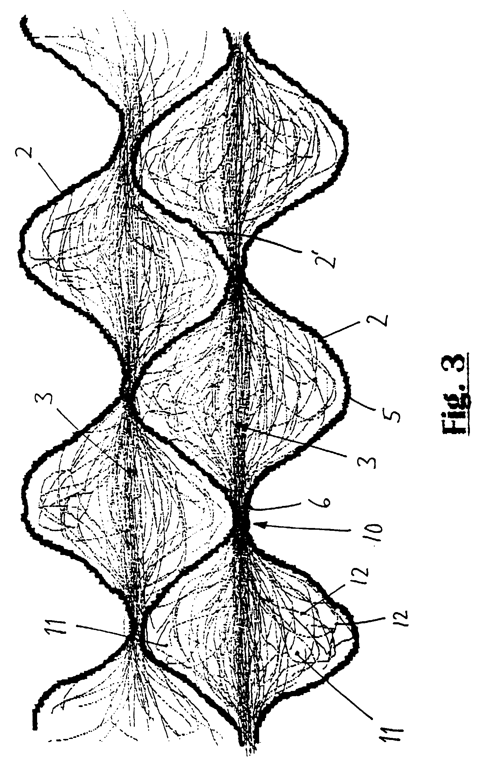

Alternativ kann die Filterstruktur 1 aus einer Verbundlage aus zwei Lagen Drahtgestrick 2 und 2' (siehe Fig. 1) und dem dazwischen liegenden Fasergewebe 3 gebildet sein, wobei die beiden Lagen des Drahtgestricks 2 und 2' eine gleiche Prägung aufweisen, jedoch in entgegengerichteter Ausrichtung, d.h. die V-förmige Anordnung zeigt in entgegengesetzte Richtungen. Dadurch überkreuzen sich die linienförmigen Wellenberge der beiden Drahtgestricke 2 und 2' und bilden an den Kreuzungspunkten Verdichtungsbereiche 10 (siehe Fig. 3), in denen das dazwischenliegende Fasergewebe 3 zusammengedrückt und verdichtet wird (komprimierte Zonen). Wenn die Prägungen in zwei benachbarten Drahtgestricken 2 und 2' gleichartig gebildet sind, z.B. als lineare Wellenform, und in den beiden Drahtgestricken 2 und 2' die gleiche Ausrichtung aufweisen, so entstehen Verdichtungsbereiche, wenn die Wellenformen mit geringem Abstand nebeneinander zu liegen kommen. Das Fasergewebe 3 wird durch die Verdichtungsbereiche 10 an dem Drahtgestrick 2 und 2' fixiert. Zusätzlich zu dem Fasergewebe 3 kann noch ein Anteil an losen Fasern die Fasermateriallage bilden.

Neben den Verdichtungsbereichen 10 bildet entweder ein Wellenberg oder ein Wellental, d.h. eine Erhebung 5 bzw. eine Vertiefung 6, oder eine Kombination aus einer Erhebung 5 und einer Vertiefung 6, die einander zugeordnet sind und im wesentlichen aufeinander liegen, Kammern oder Taschen 11, in denen das Fasergewebe 3 nicht oder nicht so stark verdichtet ist. Einzelne Fasern 12 oder Faserstränge können sich aus dem Fasergewebe 3 entweder von selbst oder durch eine entsprechende Behandlung lockern und die Taschen 11 locker füllen. Da die Taschen 11 durch die einzelnen Drähte des geprägten Drahtgestricks 2, 2' gebildet werden, sind sie nicht hermetisch geschlossen, sondern werden im wesentlichen als derjenige Bereich definiert, den die gelockerten Fasern 12 einnehmen können.

Die Behandlung zur Lockerung des Fasergewebes dient dazu, eine flauschige Struktur bzw. einen hohen Nadelfilzanteil zu erhalten. Dazu können an sich bekannte Maßnahmen wie Walken oder Verfilzen eingesetzt werden.

In den komprimierten Zonen oder Verdichtungsbereichen 10 wird durch die dichte Faseranordnung eine hohe Abscheidung von Feststoffpartikeln aus dem hindurch strömenden Abgas erzielt. In den Taschen 11 mit lockerer Faseranordnung wird eine zusätzliche Feinstpartikelabscheidung erzielt, indem Partikel nach einer Kollision mit den Fasern 12 durch Adhäsion an den Fasern 12 anhaften und in den Taschen 11 gespeichert werden können.

Durch die räumliche Ausdehnung der Filterstruktur 1 mit Zonen unterschiedlicher Dichte der Fasern 12 des Fasergewebes 3 wird eine Tiefenfilterwirkung unterstützt und eine verbesserte Abscheidung bei geringem Abgasgegendruck erzielt.

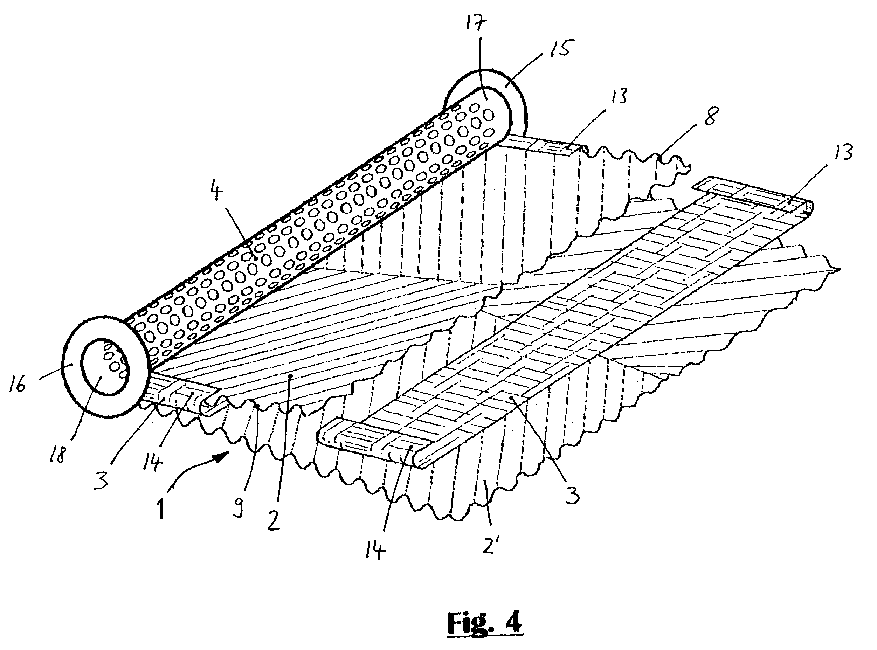

Bei einem weiteren Ausführungsbeispiel einer erfindungsgemäßen Filterstruktur 1 (siehe Fig. 4) ist die Breite des Fasergewebes 3 größer als jene des zugehörigen Drahtgestricks 2, so daß die beiden gegenüberliegenden Randabschnitte 13 und 14 um die Ränder 8 bzw. 9 des Drahtgestricks 2 herumgelegt oder gefaltet werden und einen Streifen mit doppellagigem Fasergewebe 3 bilden. Bei Bedarf und bei entsprechend größerer Breite des Fasergewebes 3 kann dieses an dem Streifen zumindest noch einmal auf sich selbst gefaltet werden und somit einen Streifen mit zumindest zweilagigem Fasergewebe 3 bilden. Durch den Streifen wird die Materialdichte beim Aufwickeln auf den Trägerkörper 4 an den Rändern der Filterstruktur 1 erhöht und durch die Komprimierung des Fasermaterials wird die Abdichtung in den Randbereichen der Filterkerze verbessert, wodurch Bypässe für den Abgasstrom verhindert werden.

Das Trägerrohr 4 kann an seinen beiden Endbereichen axiale Begrenzungen 15, 16 aufweisen, die beim Aufwickeln einer beliebig gestalteten Filterstruktur 1 axiale Anschläge bilden und damit verhindern, daß sich seitliche Bypässe bilden können. Die Begrenzung 15, 16 kann z.B. als geschlossene Scheibe und die Begrenzung 16 als Ring direkt an den Enden des Trägerrohres 4 (gemäß Fig. 4) oder von den Enden beabstandet gebildet sein, beispielsweise am Ende des gelochten Bereichs des Trägerrohres 4, wenn sich dieser gelochte Bereich nicht direkt bis zu den Enden des Trägerrohres 4 erstreckt (wie in den Fig. 1 und 4 dargestellt ist). Die ungelochten Endbereiche 17, 18 des Trägerrohres 4 ermöglichen eine verbesserte Abdichtung der Filterstruktur 1 zur Vermeidung von Bypässen, sei es mit oder ohne Begrenzungen 15, 16.

Das Fasergewebe 3 kann mit Unterbrechungen in Längsrichtung in einzelne Gewebeabschnitte unterteilt angeordnet sein (siehe schematische Darstellung in Fig. 4), so daß beim Aufwickeln die Anordnung des Fasergewebes 3 am Trägerrohr 4 in radialer Richtung wie auch in Umfangsrichtung definiert festlegbar ist.
Bei einer bevorzugten alternativen Ausführungsform (nicht dargestellt) wird unmittelbar auf das Trägerrohr 4 eine Wicklung des Drahtgestricks 2 gelegt, bevor eine Lage des Fasergewebes 3 aufgebracht wird. Das hat den Vorteil, daß die Verteilung des Abgases verbessert und der Gas-Gegendruck verringert wird.

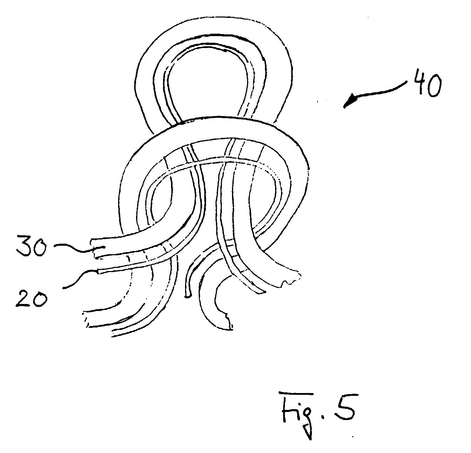

Fig. 5 veranschaulicht schematisch einige Maschen eines Draht-/Fadengestricks 40, welches eine Filterstruktur zum Filtern von Feststoffen aus einem Gasstrom bildet. Es sind hierbei ein hochtemperaturfester Draht 20 und ein aus hochtemperaturfestem Fasermaterial gebildeter Faden 30 (Hilfsfaden) gemeinsam verstrickt, wobei der Draht 20 und der Faden 30 separat im wesentlichen nebeneinander verlaufen. Auf diese Weise sind ein Drahtgestrick und ein im wesentlichen ähnliches aber unabhängiges Fadengestrick überlagert, wobei durch den parallelen Verlauf von Draht 20 und Faden 30 eine besonders gute Stützwirkung für den Faden 30 erzielt wird. Selbstverständlich können auch mehrere separate Fäden gemeinsam mit dem Draht 20 verstrickt werden, wobei die Anzahl, individuelle Stärke und das Material der einzelnen Fäden im Hinblick auf die gewünschte Filterwirkung ausgewählt wird.

Ein erfindungsgemäßer Partikelfilter weist eine oder mehrere der beschriebenen Filterkerzen auf und ist insbesondere zum Entfernen von Rußpartikeln aus dem Abgas von Dieselmotoren geeignet, das im wesentlichen radial durch die Filterstrukturen hindurch strömt, um einen kurzen Strömungsweg durch die Filterstruktur zu schaffen, wodurch der erzeugte Abgasgegendruck vergleichsweise gering bleibt.

## Patentansprüche

1. Filterstruktur zum Filtern von Feststoffen aus einem Gasstrom, insbesondere zum Reinigen des Abgases von Brennkraftmaschinen, mit einem Filtermedium aus Fasermaterial und einer Stützstruktur für das Fasermaterial, dadurch **gekennzeichnet**,
daß das Fasermaterial im wesentlichen ein hochtemperaturfestes Fasergewebe (3) ist,
daß die Stützstruktur ein räumlich geprägtes, hochtemperaturfestes Drahtgestrick (2) ist, und
daß die Filterstruktur (1) aus zumindest einer ein Fasergewebe (3) und ein geprägtes Drahtgestrick (2) aufweisenden Lage aufgebaut ist.

2. Filterstruktur nach Anspruch 1,
dadurch **gekennzeichnet,**
daß das Drahtgestrick (2) mit Erhebungen (5) und/oder Vertiefungen (6) geprägt ist.

3. Filterstruktur nach Anspruch 1 oder 2,
dadurch **gekennzeichnet**,
daß das Drahtgestrick (2) in Wellenform geprägt ist.

4. Filterstruktur nach einem der Ansprüche 1 bis 3,
dadurch **gekennzeichnet**,
daß mindestens ein Hilfsfaden aus Fasermaterial in das Drahtgestrick (2) eingestrickt und mit diesem geprägt ist.

5. Filterstruktur nach einem der Ansprüche 1 bis 4,
dadurch **gekennzeichnet**,
daß sie aus sich regelmäßig oder unregelmäßig abwechselnden Lagen von Drahtgestrick (2, 2'), Drahtgestrick mit Hilfsfaden und Fasergewebe (3) mehrlagig aufgebaut ist.

6. Filterstruktur nach einem der Ansprüche 2 bis 5,
dadurch **gekennzeichnet**,
daß durch die Erhebungen (5) bzw. die Vertiefungen (6) des geprägten Drahtgestricks (2, 2') Zonen (10) mit komprimiertem Fasermaterial bzw. Fasergewebe (3) und Zonen (11) zum gelockerten Aufnehmen des Fasermaterials bzw. des Fasergewebes (3) gebildet sind.

7. Filterstruktur nach Anspruch 6,
dadurch **gekennzeichnet**,
daß die Zonen (11) zum gelockerten Aufnehmen des Fasermaterials bzw. des Fasergewebes (3) durch voneinander weggerichtete Erhebungen (5) und Vertiefungen (6) von zwei benachbarten Lagen des Drahtgestricks (2, 2') gebildet sind.

8. Filterstruktur nach einem der Ansprüche 1 bis 7,
dadurch **gekennzeichnet**,
daß das Filtermedium aus Fasergewebe (3) mit zusätzlichem lockerem Fasermaterial aus noch temperaturfesten Fasern besteht.

9. Filterstruktur nach einem der Ansprüche 1 bis 8,
dadurch **gekennzeichnet**,
daß das Fasergewebe (3) in seiner Höhe, Dichte, Webart und Faserart variiert ist.

10. Filterstruktur nach einem der Ansprüche 1 bis 9,
dadurch **gekennzeichnet**,
daß das Fasergewebe (3) eine Beschichtung zur Rußzünd-temperaturabsenkung und/oder als Oxidationskatalysator aufweist.

11. Filterstruktur nach einem der Ansprüche 1 bis 10,
dadurch **gekennzeichnet**,
daß die Prägung des Drahtgestricks (2) in seiner Höhe, Form und Phase variiert ist.

12. Filterstruktur nach einem der Ansprüche 1 bis 11,
dadurch **gekennzeichnet**,
daß das Drahtgestrick (2) in seiner Gestrickart, Maschenweite, Stärke und dem Werkstoff des Drahtes variiert ist.

13. Partikelfilter zur Abgasreinigung mit einer Filterkerze, die eine Filterstruktur aus einem Fasergewebe und eine Stützstruktur aus Drahtgestrick für das Fasergewebe aufweist, insbesondere nach einem der vorhergehenden Ansprüche,
dadurch **gekennzeichnet,**
daß das zum Aufwickeln auf ein perforiertes Trägerrohr (4) vorgesehene Fasergewebe (3) und Drahtgestrick (2, 2') zumindest die Breite des perforierten Bereichs des Trägerrohres (4) aufweisen und ein- oder mehrlagig auf das Trägerrohr (4) aufgewickelt sind.

14. Partikelfilter nach Anspruch 13,
dadurch **gekennzeichnet**,
daß die Stützstruktur ein räumlich geprägtes Drahtgestrick (2) ist.

15. Partikelfilter nach Anspruch 13 oder 14,
dadurch **gekennzeichnet**,
daß das Drahtgestrick (2) ein Rundgestrick ist, das vor oder bei dem Aufwickeln auf das Trägerrohr (4) flach zusammengelegt wird und eine Lage Fasergewebe (3) enthält.

16. Partikelfilter nach einem der Ansprüche 13 bis 15,
dadurch **gekennzeichnet**,
daß die beiden Endbereiche (17, 18) des perforierten Trägerrohres (4) ohne Lochung ausgebildet sind.

17. Partikelfilter nach einem der Ansprüche 13 bis 16,
dadurch **gekennzeichnet**,
daß das Trägerrohr (4) an seinen beiden Endbereichen (17, 18) axiale Begrenzungen (15, 16) für die Filterstruktur (1) aufweist.

18. Partikelfilter nach einem der Ansprüche 13 bis 17,
dadurch **gekennzeichnet**,
daß das Fasergewebe (3) um die beiden Seitenkanten (8, 9) des zugehörigen Drahtgestricks (2, 2') gefaltet oder auf sich selbst zurückgefaltet ist.

19. Partikelfilter nach einem der Ansprüche 13 bis 18,
dadurch **gekennzeichnet**,
daß der Aufbau der Filterstruktur (1) in Abhängigkeit von der radialen Entfernung vom Trägerrohr (4) unterschiedlich gebildet ist, insbesondere unter Berücksichtigung der Dichte des Fasermaterials.

20. Filterstruktur zum Filtern von Feststoffen aus einem Gasstrom, insbesondere zum Reinigen des Abgases von Brennkraftmaschinen, mit einem Filtermedium aus Fasermaterial und einer Stützstruktur für das Fasermaterial aus einem Drahtgestrick (2)
dadurch **gekennzeichnet**,
daß der Draht (20) und mindestens ein aus Fasermaterial gebildeter Faden (30) gemeinsam verstrickt sind, so daß ein überlagertes Draht-/Fadengestrick (40) gebildet ist.

21. Filterstruktur nach Anspruch 20,
dadurch **gekennzeichnet**,
daß zwei parallele Fäden gemeinsam mit dem Draht verstrickt sind.

22. Filterstruktur und Partikelfilter nach einem der vorhergehenden Ansprüche,
dadurch **gekennzeichnet**,
daß zusätzlich zum Fasergewebe Nadelfilz vorhanden ist.
